# EUROPÄISCHE PATENTSCHRIFT

(11) **EP 2 861 448 B1**
(45) Veröffentlichungstag und Bekanntmachung des Hinweises auf die Patenterteilung: **22.03.2017**
(21) Anmeldenummer: 13729261.1
(22) Anmeldetag: 11.06.2013
(51) Int. Cl.: B60K 37/06, B60Q 1/00, G06F 3/01, G06F 3/044, H03K 17/96

(54) **BEDIENUNGSSYSTEM FÜR FAHRERASSISTENZSYSTEME EINES KRAFTWAGENS UND KRAFTWAGEN MIT EINEM SOLCHEN BEDIENUNGSSYSTEM**
OPERATING SYSTEM FOR DRIVER ASSISTANCE SYSTEMS OF A MOTOR VEHICLE AND MOTOR VEHICLE WITH AN OPERATING SYSTEM OF THIS KIND
SYSTÈME DE COMMANDE DE SYSTÈMES D'AIDE À LA CONDUITE D'UN VÉHICULE AUTOMOBILE ET VÉHICULE AUTOMOBILE COMPRENANT UN TEL SYSTÈME DE COMMANDE

(30) Priorität: 15.06.2012 DE 102012011887
(43) Veröffentlichungstag der Anmeldung: 22.04.2015
(73) Patentinhaber: Audi AG, 85045 Ingolstadt (DE)
(72) Erfinder: WILDING, Werner, 85137 Walting (DE); SCHULZ, Benjamin, 85114 Buxheim (DE); MUHR, Tobias, 85049 Ingolstadt (DE)
(74) Vertreter: Brandt, Kai
(86) Internationale Anmeldenummer: PCT/EP2013/001697
(87) Internationale Veröffentlichungsnummer: WO 2013/185901

(56) Entgegenhaltungen:
- WO-A1-87/06893
- US-A1- 2011 241 850

## Beschreibung

Die Erfindung betrifft ein Bedienungssystem für Fahrerassistenzsysteme eines Kraftwagens sowie einen Kraftwagen mit einem solchen Bedienungssystem.

Um die in einem modernen Kraftfahrzeug angebotenen Fahrerassistenzsysteme zu aktivieren und verschiedene Funktionen zu bedienen, werden am Fahrerplatz verschiedene Schalter und/oder Hebel verwendet. Beispielsweise werden viele der Fahrerassistenzsysteme über Schalter, welche an einem Lenkrad angebracht sind oder über sogenannte Lenkstockhebel gesteuert.

Durch die steigende Anzahl an Funktionen und neuen Stufen der Automatisierung solcher Fahrerassistenzsysteme sowie dem begrenzt zur Verfügung stehenden Platz im Direktzugriff des Fahrers wird die Auswahl und Betätigung der Fahrerassistenzsysteme immer unübersichtlicher. Teilweise sind die Bedienelemente zur Steuerung bzw. Bedienung der Fahrerassistenzsysteme durch den Fahrer nicht mehr direkt einsehbar. Insgesamt kann der Fahrer durch die steigende Anzahl von Fahrerassistenzsystemen und den dafür vorgesehenen Bedienungselementen vom Geschehen auf der Fahrbahn abgelenkt werden. Des Weiteren werden durch aktuell verbreite Bedienungssysteme für Fahrerassistenzsysteme die gestiegenen Bedienungsansprüche hinsichtlich Komfort und einer möglichst einfachen Bedienbarkeit nur unzureichend erfüllt.

Das Dokument US 2011/241850 A zeigt den Oberbegriff des Anspruchs 1.

Es ist daher die Aufgabe der vorliegenden Erfindung, ein Bedienungssystem für Fahrerassistenzsysteme eines Kraftwagens sowie einen Kraftwagen mit einem solchen Bedienungssystem bereitzustellen, mittels welchen eine verbesserte Steuerung der Fahrerassistenzsysteme ermöglicht wird.

Diese Aufgabe wird durch ein Bedienungssystem für Fahrerassistenzsysteme mit den Merkmalen des Patentanspruchs 1 sowie durch einen Kraftwagen mit einem solchen Bedienungssystem mit den Merkmalen des Patentanspruchs 8 gelöst. Vorteilhafte Ausgestaltungen mit zweckmäßigen und nichttrivialen Weiterbildungen der Erfindung sind in den abhängigen Ansprüchen angegeben.

Ein erfindungsgemäßes Bedienungssystem für Fahrerassistenzsysteme eines Kraftwagens umfasst eine Mehrzahl von zumindest einer Bediengruppe zuweisbaren Bedienelementen, welche ausschließlich zum Bedienen von zumindest einer Gruppe zuweisbaren Fahrerassistenzsystemen ausgelegt sind, wobei den Bedienelementen in Abhängigkeit von jeweils einstellbaren Kombinationen von Betriebsmodi der Fahrerassistenzsysteme jeweils eine entsprechende Funktion zum Bedienen der Fahrerassistenzsysteme zuweisbar ist. Mittels der Bedienelemente werden somit nicht mehr einzelne Fahrerassistenzsysteme gesteuert, sondern zu definierende und eventuell von einem Nutzer spezifisch anpassbare Gruppen bzw. Cluster von Fahrerassistenzsystemen gesteuert. Die jeweils zu einer Gruppe zusammengefassten Fahrerassistenzsysteme können jeweils in unterschiedlichen Betriebsmodi betrieben werden, wobei die jeweils einstellbaren Kombinationen der Betriebsmodi einer entsprechenden Automatisierung einer oder mehrerer Aufgaben der Fahrzeugsteuerung entsprechen.

Durch die erfindungsgemäße Zusammenfassung der Bedienelemente zu einer Bediengruppe und Zuweisung dieser Bedienelemente zu einer Gruppe von Fahrerassistenzsystemen kann insgesamt eine übersichtlichere Gestaltung des Fahrerarbeitsplatzes erzielt werden. Durch die situationsangepasste Zuweisung von Funktionen zu den jeweiligen Bedienelementen in Abhängigkeit von den jeweiligen Betriebsmodi der Fahrerassistenzsysteme kann die Gesamtzahl der erforderlichen Bedienelemente zur Steuerung der Fahrerassistenzsysteme erheblich reduziert werden. Durch die übersichtlichere Gestaltung des Fahrerarbeitsplatzes wird eine verbesserte Steuerung der Fahrerassistenzsysteme ermöglicht, wobei gleichzeitig der Fahrer während der Steuerung der Fahrerassistenzsysteme weniger vom Fahrgeschehen abgelenkt wird, so dass insgesamt ein sicherer Betrieb des Kraftwagens ermöglicht wird.

Bei einer vorteilhaften Ausführungsform der Erfindung umfassen die Bedienelemente jeweils eine Anzeigeeinrichtung, welche dazu ausgelegt ist, die in Abhängigkeit von der jeweils eingestellten Kombination der Betriebsmodi der Fahrerassistenzsysteme entsprechend zugewiesene Funktion des jeweiligen Bedienelements anzuzeigen. Vorzugsweise können die Bedienelemente in dem Sichtfeld des Fahrers angeordnet, so dass dieser durch die Anzeige der jeweils zugewiesenen Funktion der Bedienelemente jederzeit darüber informiert ist, mittels welcher Bedienelemente er die betreffenden Fahrerassistenzsysteme auf welche Art und Weise ansteuern kann. Wahlweise können die Bedienelemente im gesamten Fahrerwirkbereich angeordnet werden.

Bei einer weiteren vorteilhaften Ausführungsform der Erfindung ist es vorgesehen, dass wenigstens eines der Bedienelemente in Abhängigkeit von der jeweils eingestellten Kombination der Betriebsmodi der Fahrerassistenzsysteme dazu ausgelegt ist, den Betriebsmodus von zumindest einem der Fahrerassistenzsysteme zu ändern. Mit anderen Worten kann der Fahrer jederzeit durch Betätigen des entsprechenden Bedienelements die Betriebsmodi der Fahrerassistenzsysteme ändern, so dass er den gewünschten Automatisierungsgrad der Fahrerassistenzsysteme jederzeit wunschgemäß einstellen kann.

Gemäß einer weiteren vorteilhaften Ausführungsform der Erfindung ist es vorgesehen, dass in Abhängigkeit von der jeweils eingestellten Kombination der Betriebsmodi der Fahrerassistenzsysteme die jeweiligen Anzeigeeinrichtungen dazu ausgelegt sind, eine den jeweiligen Kombinationen zugeordnete Farbe anzuzeigen. Dadurch wird dem Fahrer auf besonders einfache Weise jederzeit signatisiert, in welchem Betriebsmodus die jeweiligen Fahrerassistenzsysteme gerade betrieben werden, so dass der Fahrer darüber informiert ist, mittels welchen Assistenzfunktionen er augenblicklich von den Fahrerassistenzsystemen unterstützt wird.

Vorzugsweise umfassen die jeweiligen Anzeigeeinrichtungen eine Mehrzahl von organischen Leuchtdioden, welche dazu ausgelegt sind, in Abhängigkeit von der jeweils eingestellten Kombination der Betriebsmodi der Fahrerassistenzsysteme die den jeweiligen Bedienelementen entsprechend zugewiesene Funktion als Schriftzug oder Symbol in einer den jeweiligen Kombinationen zugeordneten Farbe anzuzeigen. Dadurch wird die Steuerung und Bedienung der Fahrerassistenzsysteme sowie das Führen des Kraftwagens insgesamt erleichtert und verbessert.

Gemäß einer weiteren vorteilhaften Ausführungsform ist es vorgesehen, dass die Bedienelemente als Taster, Drehelement oder dergleichen ausgebildet sind. Mit anderen Worten ist es vorgesehen, dass die Bedienelemente als tatsächliche und nicht nur als virtuelle Schalter im Eingriffsbereich des Fahrers angeordnet sind.

Bei einer weiteren vorteilhaften Ausführungsform der Erfindung sind die Bedienelemente zum Bedienen eines als Abstandsregeltempomaten ausgebildeten Fahrerassistenzsystems und eines als Spurhalteassistenten ausgebildeten Fahrerassistenzsystems ausgelegt. Der Abstandsregeltempomat und der Spurhalteassistent können dabei in unterschiedlichen Automatisierungsstufen betrieben werden, wobei deren Funktionalitäten sich gegenseitig zur Unterstützung des Fahrers ergänzen können. Mittels der Bedienelemente können dabei sowohl der Abstandsregeltempomat als auch der Spurhalteassistent je nach aktuellem Betriebsmodus der Fahrerassistenzsysteme entsprechend angesteuert werden, wobei mittels der Bedienelemente gleichzeitig ermöglicht ist, dass deren jeweilige Betriebsmodi verändert werden können.

Ein erfindungsgemäßer Kraftwagen umfasst ein erfindungsgemäßes Bedienungssystem oder eine vorteilhafte Ausführungsform des erfindungsgemäßen Bedienungssystems.

Gemäß einer vorteilhaften Ausgestaltung des Kraftwagens ist es vorgesehen, dass die Bedienelemente an einem Lenkrad des Kraftwagens angeordnet sind. Somit ist sichergestellt, dass die Bedienelemente unmittelbar im Sichtfeld des Fahrers angeordnet sind, so dass eine Betätigung der Bedienelemente erfolgen kann, ohne dass der Fahrer seinen Blick von der Fahrbahn abwenden muss. Ein sicheres Führen des Kraftwagens wird dadurch maßgeblich unterstützt. Zusätzlich oder alternativ können die Bedienelemente auch in einem anderen, dem Fahrer zugänglichen Wirkbereich des Fahrzeuginnenraums angeordnet sein, beispielsweise im Bereich der Mittelkonsole oder dergleichen.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung eines Kraftwagens mit einer Mehrzahl von zu einer Bediengruppe zusammengefassten Bedienelementen und einer Mehrzahl von Fahrerassistenzsystemen, wobei zwei der Fahrerassistenzsysteme einer Gruppe zugewiesen sind, welche mittels der Bedienelemente steuerbar sind; und
- Fig. 2: eine schematische Darstellung eines Lenkrads für einen Kraftwagen, wobei die in Fig. 1 gezeigten Bedienelemente an dem Lenkrad angeordnet sind.

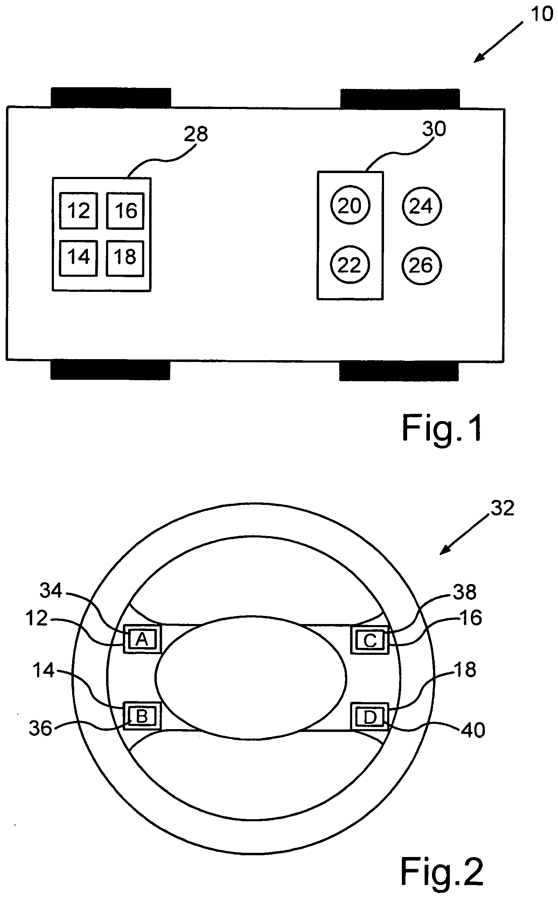

Ein Kraftwagen 10 mit einer Mehrzahl von Bedienelementen 12, 14, 16, 18 und einer Mehrzahl von Fahrerassistenzsystemen 20, 22, 24, 26 ist in einer schematischen Darstellung in Fig. 1 gezeigt. Die Bedienelemente 12, 14, 16, 18 sind im vorliegenden Fall einer Bediengruppe 28 zugewiesen. Die Fahrerassistenzsysteme 20, 22 sind dabei zu einer Gruppe 30 zusammengefasst bzw. dieser zugewiesen. Im vorliegenden Fall handelt es sich bei dem Fahrerassistenzsystem 20 um einen Abstandsregeltempomaten und bei dem Fahrerassistenzsystem 22 um einen Spurhalteassistenten, wobei es sich bei den Fahrerassistenzsystemen 20, 22, 24, 26 im Wesentlichen um beliebige Fahrerassistenzsysteme handeln kann, welche zur Unterstützung eines Fahrers des Kraftwagens 10 eingesetzt werden können.

Die der Bediengruppe 28 zugewiesenen Bedienelemente 12, 14, 16, 18 sind ausschließlich zum Bedienen der der Gruppe 30 zugewiesenen Fahrerassistenzsysteme 20, 22 ausgelegt. Die Fahrerassistenzsysteme 20, 22 können dabei in jeweils einstellbaren Kombinationen unterschiedlicher Betriebsmodi betrieben werden, wobei jeweils eine entsprechende Funktion zum Bedienen der Fahrerassistenzsysteme 20, 22 den Bedienelementen 12, 14, 16, 18 zugewiesen ist.

Bei den Betriebsmodi kann es sich beispielsweise um unterschiedliche Aktivierungsstufen handeln, in welchen die Fahrerassistenzsysteme 20, 22 betreibbar sind, wobei je nach Betriebsmodus bzw. Aktivierungsstufe die Fahrerassistenzsysteme 20, 22 mit einem unterschiedlich hohen Automatisierungsgrad fahrerunterstützend zum Betreiben des Kraftwagens 10 eingreifen können. Bei einer ersten Aktivierungsstufe kann es sich beispielsweise um eine rein manuelle Fahrt handeln, bei welcher weder der Abstandsregeltempomat 20 noch der Spurhalteassistent 22 aktiviert sind. In diesem Fall kann beispielsweise lediglich dem Bedienelement 12 eine Funktion zum Aktivieren des Abstandsregeltempomaten 20 zugewiesen sein, wobei die weiteren Bedienelemente 14, 16, 18 keine Funktion zum Bedienen des Abstandsregeltempomaten 20 oder des Spurhalteassistenten 22 zugewiesen ist.

Nach einer Betätigung des Bedienelements 12 wird der Abstandsregeltempomat 20 derart aktiviert, dass eine assistierte Längsführung durch den Abstandsregeltempomaten 20 gegeben ist, wobei der Spurhalteassistent 22 nach wie vor nicht aktiviert ist. Diese Kombination der Betriebsmodi entspricht einer zweiten Aktivierungsstufe. In diesem Fall ist dem Bedienelement 12 die Funktion zugeordnet, dass durch Betätigung des Bedienelements 12 der Spurhalteassistent 22 zugeschaltet wird. Dem Bedienelement 14 ist dabei die Funktion zugeordnet, dass bei Betätigung des Bedienelements 14 wieder in die Aktivierungsstufe 1 zurückgeschaltet wird, was, wie bereits erwähnt, einer rein manuellen Fahrt entspricht. Die Bedienelemente 16, 18 sind in der vorliegenden Kombination der Betriebsmodi bzw. der vorliegenden zweiten Aktivierungsstufe dazu ausgelegt, eine gewünschte Setzgeschwindigkeit des Abstandsregeltempomaten 20 zu erhöhen bzw. zu erniedrigen.

Durch Betätigen des Bedienelements 12 wird von der zweiten Aktivierungsstufe in eine dritte Aktivierungsstufe gewechselt, bei welcher nach wie vor die assistierte Längsführung durch den Abstandsregeltempomaten 20 aktiviert ist, wobei nun auch der Spurhalteassistent 22 zugeschaltet ist. Beispielsweise gibt der Spurhalteassistent 22 bei einem Verlassen oder einem drohenden Verlassen einer Fahrspur eine Warnung an einen Fahrer des Kraftwagens 10 aus. Ein aktiver Lenkeingriff erfolgt jedoch in dieser dritten Aktivierungsstufe nicht durch den Spurhalteassistenten 22. Die Bedienelemente 16, 18 sind in der vorliegenden Kombination der Betriebsmodi bzw. der vorliegenden dritten Aktivierungsstufe weiterhin dazu ausgelegt, eine gewünschte Setzgeschwindigkeit des Abstandsregeltempomaten 20 zu erhöhen bzw. zu erniedrigen. Das Bedienelement 14 dient dazu, von der dritten Aktivierungsstufe wieder in die zweite Aktivierungsstufe zurückzuschalten.

Durch Betätigen des Bedienelements 12 wird von der dritten Aktivierungsstufe in eine vierte Aktivierungsstufe gewechselt, bei welcher eine voll automatisierte Längs- und Querführung durch die in den entsprechenden Betriebsmodus gewechselten Fahrerassistenzsysteme 20, 22 gegeben ist. In der vierten Aktivierungsstufe regelt der Abstandsregeltempomat 20 selbstständig die Fahrgeschwindigkeit des Kraftwagens 10 in Abhängigkeit von der Verkehrssituation, also insbesondere in Abhängigkeit von vorausfahrenden weiteren Fahrzeugen bzw. Hindernissen. Der Spurhalteassistent 22 regelt vollautomatisch die Querführung des Kraftwagens 10, wobei der Spurhalteassistent 22 selbständig entsprechende Lenkbewegungen am Kraftwagen 10 durchführen kann, um beispielsweise eine vorgegebene Fahrspur zu halten. In dieser vierten Aktivierungsstufe ist das Bedienelement 12 ohne Funktion, das Bedienelement 14 dient dazu, von der vierten Aktivierungsstufe wieder in die dritte Aktivierungsstufe oder wahlweise auch in die zweite oder erste Aktivierungsstufe zurückzuschalten. Die Bedienelemente 16, 18 dienen beispielsweise dazu, Manöver im Sinne von Spurwechseln nach rechts oder links durch den Spurhalteassistenten 22 durchzuführen zu lassen.

Die in Fig. 1 gezeigte Gruppierung der Bedienelemente 12, 14, 16, 18 zu der Bediengruppe 28 kann entweder werksseitig voreingestellt sein und/oder auch benutzerspezifisch vornehmbar sein. Die Zuweisung der Fahrerassistenzsysteme 20, 22 zu der Gruppe 30 kann ebenfalls werksseitig bereits voreingestellt sein oder zusätzlich ist es ebenfalls möglich, dass eine von der hier gezeigten Darstellung abweichende Gruppierung der Fahrerassistenzsysteme 20, 22, 24, 26 erfolgen kann. Die Funktionszuweisung zu den Bedienelementen 12, 14, 16, 18 in Abhängigkeit von den jeweils einstellbaren Kombinationen von Betriebsmodi der Fahrerassistenzsysteme 20, 22, 24, 26 kann ebenfalls werksseitig voreingestellt sein oder auch wahlweise benutzerspezifisch eingestellt sein.

In Fig. 2 ist ein Lenkrad 32 gezeigt, an welchem die in Fig. 1 gezeigten Bedienelemente 12, 14, 16, 18 angeordnet sind. Die Bedienelemente 12, 14, 16, 18 umfassen jeweils eine Anzeigeeinrichtung 34, 36, 38, 40. Im vorliegenden Fall sind die Anzeigeeinrichtungen 34, 36, 38, 40 als Displays mit einer Mehrzahl von hier nicht dargestellten organischen Leuchtdioden ausgebildet, welche dazu ausgelegt sind, in Abhängigkeit von der jeweils eingestellten Kombination der Betriebsmodi der Fahrerassistenzsysteme 20, 22 die den jeweiligen Bedienelementen 12, 14, 16, 18 entsprechend zugewiesene Funktion als Schriftzug oder Symbol A, B, C, D in einer den jeweiligen Kombinationen zugeordneten Farbe anzuzeigen. Mit anderen Worten wird mittels der Anzeigeeinrichtungen 34, 36, 38, 40 je nach Betriebsmodus bzw. Aktivierungsstufe der Fahrerassistenzsysteme 20, 22 angezeigt, welche Auswirkung eine Betätigung der Bedienelemente 12, 14, 16, 18 jeweils auf die Fahrerassistenzsysteme 20, 22 hat. Darüber hinaus ist es durch die farbliche Kennzeichnung der jeweiligen Bedienelemente 12, 14, 16, 18, welche jeweils spezifisch in Abhängigkeit davon erfolgt, in welchem Betriebsmodus die Fahrerassistenzsysteme 20, 22 augenblicklich bedient werden, auf einfache Weise möglich, einem Fahrer des Kraftwagens 10 jederzeit auf einfache Weise den aktuellen Betriebsmodus der Fahrerassistenzsysteme 20, 22 anzuzeigen. Im vorliegenden Fall sind die Bedienelemente 12, 14, 16, 18 als Taster ausgebildet, wobei die Bedienelemente 12, 14, 16, 18 beispielsweise auch als Drehelemente, als Touchelemente oder dergleichen ausgebildet sein können, bzw. als Kombinationen derselben.

## Patentansprüche

1. Bedienungssystem für Fahrerassistenzsysteme (20, 22, 24, 26) eines Kraftwagens (10), mit einer Mehrzahl von zumindest einer Bediengruppe (28) zuweisbaren Bedienelementen (12, 14, 16, 18),
**dadurch gekennzeichnet, dass**
die Bedienelemente (12, 14, 16, 18) ausschließlich zum Bedienen von zumindest zu einer Gruppe (30) zuweisbaren und zusammengefassten Fahrerassistenzsystemen (20, 22) ausgelegt sind, wobei den Bedienelementen (12, 14, 16, 18) in Abhängigkeit von jeweils einstellbaren Kombinationen von Betriebsmodi der Fahrerassistenzsysteme (20, 22) jeweils eine entsprechende Funktion zum Bedienen der Fahrerassistenzsysteme (20, 22) zuweisbar ist, wobei die jeweils einstellbaren Kombinationen der Betriebsmodi einer entsprechenden Automatisierung einer oder mehrer Aufgaben der Fahrzeugsteuerung entsprechen.

2. Bedienungssystem nach Anspruch 1,
**dadurch gekennzeichnet, dass**
die Bedienelemente (12, 14, 16, 18) jeweils eine Anzeigeeinrichtung (34, 36, 38, 40) umfassen, welche dazu ausgelegt ist, die in Abhängigkeit von der jeweils eingestellten Kombination der Betriebsmodi der Fahrerassistenzsysteme (20, 22) entsprechend zugewiesene Funktion des jeweiligen Bedienelements (12, 14, 16, 18) anzuzeigen.

3. Bedienungssystem nach Anspruch 1 oder 2,
**dadurch gekennzeichnet, dass**
wenigstens eines der Bedienelemente (12, 14, 16, 18) in Abhängigkeit von der jeweils eingestellten Kombination der Betriebsmodi der Fahrerassistenzsysteme (20, 22) dazu ausgelegt ist, den Betriebsmodus von zumindest einem der Fahrerassistenzsysteme (20, 22) zu ändern.

4. Bedienungssystem nach einem der Ansprüche 2 oder 3,
**dadurch gekennzeichnet, dass**
in Abhängigkeit von der jeweils eingestellten Kombination der Betriebsmodi der Fahrerassistenzsysteme (20, 22) die jeweiligen Anzeigeeinrichtungen (34, 36, 38, 40) dazu ausgelegt sind, eine den jeweiligen Kombinationen zugeordnete Farbe anzuzeigen.

5. Bedienungssystem nach einem der Ansprüche 2 bis 4,
**dadurch gekennzeichnet, dass**
die jeweiligen Anzeigeeinrichtungen (34, 36, 38, 40) eine Mehrzahl von organischen Leuchtdioden umfassen, welche dazu ausgelegt sind, in Abhängigkeit von der jeweils eingestellten Kombination der Betriebsmodi der Fahrerassistenzsysteme (20, 22) die den jeweiligen Bedienelementen (12, 14, 16, 18) entsprechend zugewiesene Funktion als Schriftzug oder Symbol (A, B, C, D) in einer den jeweiligen Kombinationen zugeordneten Farbe anzuzeigen.

6. Bedienungssystem nach einem der vorhergehenden Ansprüche,
**dadurch gekennzeichnet, dass**
die Bedienelemente (12, 14, 16, 18) als Taster, Drehelement oder dergleichen ausgebildet sind.

7. Bedienungssystem nach einem der vorhergehenden Ansprüche,
**dadurch gekennzeichnet, dass**
die Bedienelemente (12, 14, 16, 18) zum Bedienen eines als Abstandsregeltempomaten ausgebildeten Fahrerassistenzsystems (20) und eines als Spurhalteassistenten ausgebildeten Fahrerassistenzsystems (22) ausgelegt sind.

8. Kraftwagen (10) mit einem Bedienungssystem nach einem der vorhergehenden Ansprüche.

9. Kraftwagen (10) nach Anspruch 8,
**dadurch gekennzeichnet, dass**
die Bedienelemente (12, 14, 16, 18) an einem Lenkrad (32) des Kraftwagens (10) angeordnet sind.

## Claims

1. Operating system for driver assistance systems (20, 22, 24, 26) of a motor vehicle (10), having a plurality of operating elements (12, 14, 16, 18) which can be assigned to at least one operating group (28),
**characterised in that**
the operating elements (12, 14, 16, 18) are configured exclusively for the operation of combined driver assistance systems (20, 22) which can be assigned at least to one group (30), the operating elements (12, 14, 16, 18) being respectively assignable a corresponding function for operation of the driver assistance systems (20, 22) as a function of respectively adjustable combinations of operating modes of the driver assistance systems (20, 22), the respectively adjustable combinations of the operating modes corresponding to a corresponding automation of one or more tasks of the vehicle control.

2. Operating system according to Claim 1,
**characterised in that**
the operating elements (12, 14, 16, 18) respectively comprise a display device (34, 36, 38, 40), which is configured to display the function, correspondingly assigned as a function of the respectively adjusted combination of the operating modes of the driver assistance systems (20, 22), of the respective operating element (12, 14, 16, 18).

3. Operating system according to Claim 1 or 2,
**characterised in that**
at least one of the operating elements (12, 14, 16, 18) is configured to modify the operating mode of at least one of the driver assistance systems (20, 22) as a function of the respectively adjusted combination of the operating modes of the driver assistance systems (20, 22).

4. Operating system according to any one of Claims 2 and 3,
**characterised in that**
the respective display devices (34, 36, 38, 40) are configured to display a colour allocated to the respective combinations, as a function of the respectively adjusted combination of the operating modes of the driver assistance systems (20, 22).

5. Operating system according to any one of Claims 2 to 4,
**characterised in that** the respective display devices (34, 36, 38, 40) comprise a plurality of organic light-emitting diodes, which are configured to display the function correspondingly assigned to the respective operating elements (12, 14, 16, 18) as script or a symbol (A, B, C, D) in a colour allocated to the respective combinations, as a function of the respectively adjusted combination of the operating modes of the driver assistance systems (20, 22).

6. Operating system according to any one of the preceding claims,
**characterised in that** the operating elements (12, 14, 16, 18) are formed as a button, rotating element or the like.

7. Operating system according to any one of the preceding claims,
**characterised in that** the operating elements (12, 14, 16, 18) are configured for operating a driver assistance system (20) formed as an adaptive cruise control and a driver assistance system (22) formed as a lane departure warning system.

8. Motor vehicle (10) having an operating system according to any one of the preceding claims.

9. Motor vehicle (10) according to Claim 8,
**characterised in that** the operating elements (12, 14, 16, 18) are arranged on a steering wheel (32) of the motor vehicle (10).

## Revendications

1. Système de commande pour systèmes d'aide à la conduite (20, 22, 24, 26) d'un véhicule automobile (10), avec une multiplicité d'éléments de commande (12, 14, 16, 18) attribuables à au moins un groupe de commande (28),
**caractérisé en ce que** les éléments de commande (12, 14, 16, 18) sont conçus exclusivement pour la commande de systèmes d'aide à la conduite (20, 22) réunis et attribuables à au moins un groupe (30), une fonction correspondante pour la commande des systèmes d'aide à la conduite (20, 22) étant attribuable à chaque fois aux éléments de commande (12, 14, 16, 18) en fonction de combinaisons respectivement réglables de modes de fonctionnement des systèmes d'aide à la conduite (20, 22), les combinaisons respectivement réglables des modes de fonctionnement correspondant à une automatisation correspondante d'une ou plusieurs tâches de la commande de véhicule.

2. Système de commande selon la revendication 1, **caractérisé en ce que** les éléments de commande (12, 14, 16, 18) comprennent à chaque fois un dispositif d'affichage (34, 36, 38, 40) qui est conçu pour afficher la fonction, attribuée en fonction de la combinaison respectivement réglée des modes de fonctionnement des systèmes d'aide à la conduite (20, 22), de l'élément de commande respectif (12, 14, 16, 18).

3. Système de commande selon la revendication 1 ou 2, **caractérisé en ce que**, en fonction de la combinaison respectivement réglée des modes de fonctionnement des systèmes d'aide à la conduite (20, 22), au moins un des éléments de commande (12, 14, 16, 18) est conçu pour modifier le mode de fonctionnement d'au moins un des systèmes d'aide à la conduite (20, 22).

4. Système de commande selon l'une des revendications 2 ou 3, **caractérisé en ce que**, en fonction de la combinaison respectivement réglée des modes de fonctionnement des systèmes d'aide à la conduite (20, 22), les dispositifs d'affichage (34, 36, 38, 40) respectifs sont conçus pour afficher une couleur associée aux combinaisons respectives.

5. Système de commande selon l'une des revendications 2 à 4, **caractérisé en ce que** les dispositifs d'affichage (34, 36, 38, 40) respectifs comprennent une multiplicité de diodes électroluminescentes organiques qui sont conçues pour, en fonction de la combinaison respectivement réglée des modes de fonctionnement des systèmes d'aide à la conduite (20, 22), afficher la fonction attribuée aux éléments de commande (12, 14, 16, 18) respectifs sous la forme d'une inscription ou d'un symbole (A, B, C, D) dans une couleur associée aux combinaisons respectives.

6. Système de commande selon l'une des revendications précédentes,
**caractérisé en ce que** les éléments de commande (12, 14, 16, 18) sont conçus sous forme de boutons, éléments rotatifs ou autres.

7. Système de commande selon l'une des revendications précédentes,
**caractérisé en ce que** les éléments de commande (12, 14, 16, 18) sont conçus pour la commande d'un système d'aide à la conduite (20) conçu comme un régulateur de distance et d'un système d'aide à la conduite (22) conçu comme une aide au maintien dans la file de circulation.

8. Véhicule automobile (10) avec un système de commande selon l'une des revendications précédentes.

9. Véhicule automobile (10) selon la revendication 8, **caractérisé en ce que** les éléments de commande (12, 14, 16, 18) sont agencés sur un volant (32) du véhicule automobile (10).
